# EUROPEAN PATENT APPLICATION

(11) **EP 2 366 679 A1**
(43) Date of publication of application: **21.09.2011**
(21) Application number: 11156837.4
(22) Date of filing: 03.03.2011
(51) Int. Cl.: C05D 9/00, C05F 3/00

(54) **Waste denitrification process**

(30) Priority: 08.03.2010 IT MI20100378
(71) Applicant: Ecotecno S.p.A., 24121 Bergamo (IT)
(72) Inventor: Pansera, Luca, I-24050, Zanica, Bergamo (IT); Pansera, Mario, I-24121, Bergamo (IT)
(74) Representative: Long, Giorgio

(57) **Abstract**

The present invention refers to a process and to a relative plant for the treatment of waste, in particular of livestock effluent. More specifically, the process of the invention leads to the denitrification of said waste, at the same time obtaining residues that can be used as agricultural fertiliser.

In particular, the present invention concerns a denitrification process of an organic waste comprising a treatment step of said organic waste in the presence of a mixture comprising phosphorus pentoxide, potassium oxide, calcium oxide and magnesium oxide in the form of powder and operating in conditions in which the gaseous/vapour phase containing ammonia is taken away by evaporation or distillation.

## Description

### Description

The present invention refers to a process and to a relative plant for the treatment of waste, in particular livestock effluent. More specifically, the process of the invention leads to the denitrification of said waste, at the same time obtaining waste that can be used as agricultural fertiliser.

Nitrates are polluting substances particularly for water, where they arrive by washing out from farmland. The presence of nitrates in farmland derives from the use of fertiliser and in particular from the spreading of animal excrement from livestock. The nitrates form by oxidation of the ammonia present in the effluent or formed in it by the oxidation of organic nitrogen.

The problem of disposing of livestock effluent is thus a big issue. Recent European Community laws greatly limit the amount of nitrates that can be spread per hectare of land. Both the collection and the spreading of manure and other animal excrement are strictly regulated.

It is thus clear that it is desirable to decrease the amount of nitrogenous substances, and in particular nitrates, present in livestock effluent, so as to allow their disposal, for example as fertilizer, directly on the land.

There are various denitrification methods, including foreseeing the use of specific denitrifying microorganisms that must be added to the effluent before treatment.

However, none of the methods is satisfactory, particularly from the point of view of cost.

The problem addressed by the present invention is therefore that of providing a waste treatment process that allows a reduction in the amount of nitrogenous substances like nitrates and ammonia present and that is economically advantageous.

Such a problem is solved by a process for treating waste, in particular livestock effluent, and by a plant for carrying out such a process, as outlined in the attached claims, the definitions of which form an integral part of the present description.

Further characteristics and advantages of the present invention will become clearer from the following description of some embodiments, given for indicating and not limiting purposes, with reference to the following figures:
Figure 1 shows a schematic view of the plant object of the invention;
Figure 2 shows a schematic view of a one-stage concentrator/evaporator;
Figure 3 shows a schematic view of a two-stage concentrator/evaporator;
Figure 4 shows a schematic view of a three-stage concentrator/evaporator;
Figure 5 shows a schematic view of a second embodiment of the plant of the invention.

It has now been surprisingly found that by treating organic waste in the presence of a mixture comprising phosphorus pentoxide, potassium oxide, calcium oxide and magnesium oxide in the form of powder and operating in conditions in which the gaseous/vapour phase is taken away by distillation or evaporation, a substantial reduction in the content of nitrogenous substances and in particular nitrates in the organic waste is obtained.

In this way, the solid or semi-solid residue after the treatment can be used as fertilizer without the need for further transformations or treatments.

It has been seen that, at the same time as the reduction in the content of nitrogenous substances in the waste, there is formation of ammonia, which is collected as distillate downstream of said separation step. Advantageously, according to an embodiment, the ammonia thus formed can for example be reduced by treatment with sulphuric acid or carbon dioxide, obtaining ammonium sulphate and urea, respectively, which can in turn be reused as fertilizer.

According to a preferred aspect, the process of the invention is carried out at a temperature of between 40°C and 100°C, more preferably between 60°C and 95°C, even more preferably between 80°C and 90°C.

According to a preferred aspect, the process of the invention is carried out under a vacuum, more preferably at a relative pressure of between -0.5 and -0.95 bar, even more preferably between -0.6 and -0.85 bar.

The time that the waste stays in the separation means can vary according to the amount of waste to be treated, the temperature and the pressure applied. In an embodiment, such a time varies between 40 and 240 minutes.

The mixture comprising phosphorus pentoxide, potassium oxide, calcium oxide and magnesium oxide is added to the organic waste to be treated in ratios of between 0.3 and 15 kg per 1000 litres of organic waste, preferably between 0.8 and 8 kg per 1000 litres of organic waste.

The mixture of oxides defined above preferably comprises the following weight percentages of the components:

| | |
|---|---|
| phosphorus pentoxide (P₂O₅) | 1.3-20% |
| potassium oxide (K₂O) | 5-35% |
| calcium oxide (CaO) | 18-45% |
| magnesium oxide (MgO) | 1.3-16%. |

In an embodiment, the mixture comprising phosphorus pentoxide, potassium oxide, calcium oxide and magnesium oxide according to the invention consists of or comprises as its main component ash from organic material. According to a first aspect, such ash is vegetal, in particular ash from wood material. Alternatively, it is possible to use ash coming from the burning of animal excrement.

It should be understood that the composition of the ash can vary substantially according to its origin. Therefore, it can be foreseen to add phosphorus pentoxide, potassium oxide, calcium oxide and/or magnesium oxide in the form of fine powder to the ash, as needed, so as to obtain the composition defined above.

According to an embodiment of the process of the invention, the gaseous phase obtained in the separation step of the process of the invention - containing a high ammonia content - is treated in an acidic environment so as to obtain an ammonium salt or an ammonia derivative. This treatment makes it possible to eliminate the ammonia, which is a toxic agent, from the gaseous discharges of the process and, at the same time, to transform the gaseous ammonia into a solid fertilizer that can be reused on the land.

In a preferred embodiment, such a treatment with acidic agent is carried out with sulphuric acid or carbon dioxide. In the first case ammonium sulphate is obtained, whereas in the second case urea is obtained. Both constitute nitrogenous fertilizers able to be used as such.

The organic waste and the mixture of oxides according to the invention is advantageously premixed - typically but not necessarily under agitation - before being sent to the separation step described above.

The process of the invention, according to an embodiment, provides for the prior filtration of the organic waste to give a liquid phase - which is subjected to the separation step in the presence of said mixture of oxides - and a solid phase. The solid phase is dried and then burnt with formation of an ash from organic material that can be used as such, or possibly added to with phosphorus pentoxide, potassium oxide, calcium oxide and/or magnesium oxide, in the treatment of the liquid phase of the waste. In this way, a dual advantage is obtained: part of the waste goes to make up the mixture of oxides to be used in the inventive process, reducing to the minimum the need to externally source such a mixture; moreover, the burning of the solid residue of the waste to give ash creates heat, which is recovered and used to bring the separation means in which the treatment of the waste occurs to the operating temperature.

Possibly, the boiler in which the solid residue of the waste is burnt is also fed with methane as a further fuel, so as to supply all the heat necessary for the process and to carry the incineration of the solid waste to its completion.

Although according to the process of the invention various types of organic waste can be treated, the process is preferably applicable to livestock effluent. The relative operative simplicity of the process of the invention and of the plant that will be described hereafter indeed allow them to be made *in loco,* i.e. at the farm itself, minimising the movement of the material to be treated, which represents an advantage both financially and environmentally.

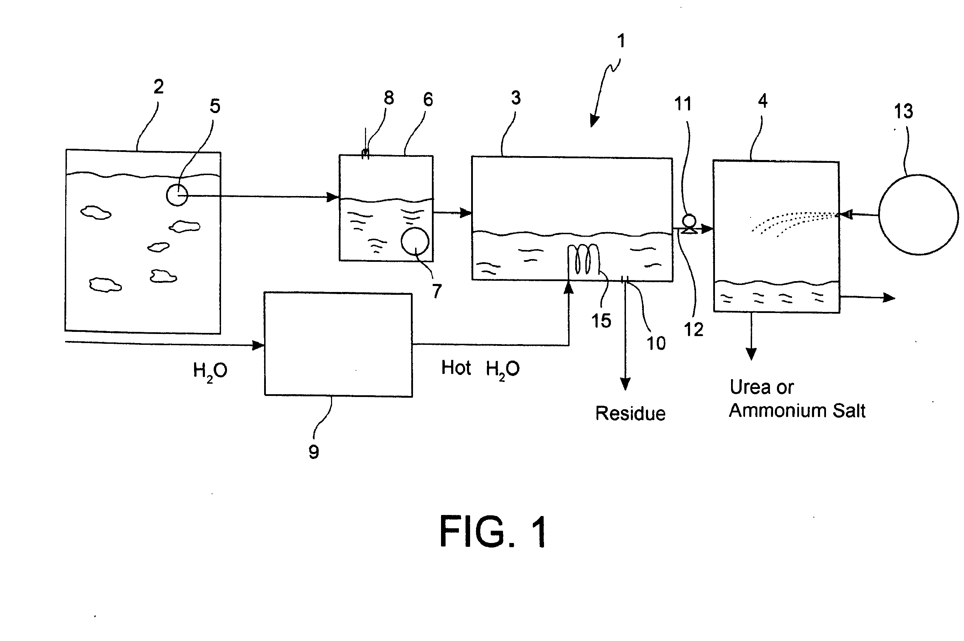

The object of the invention is also a plant for carrying out the process described above, as shown in figures 1 to 5. It should be noted that the single plant components are known and conventional, for which reason the plant has been described schematically.

With reference to figure 1, which represents a first embodiment, the treatment plant of organic waste, wholly indicated with reference numeral 1, comprises a tank 2 in which the organic waste (for example effluent consisting of livestock urine and faeces) is collected, separation means 3, in which the treatment of the organic waste in the presence of the mixture of phosphorus pentoxide, potassium oxide, calcium oxide and magnesium oxide according to the invention and the separation of the gaseous phase occur, and treatment means 4 of the gaseous phase separated in the separation means 3, in which the pullinh down of the ammonia developed during the course of the separation step occurs.

In the collection tank 2 or downstream of it pumping and shredding means 5 are arranged that take care of sending the organic waste, suitably broken down, into a pre-mixing tank 6 that comprises agitation means 7. The mixture comprising phosphorus pentoxide, potassium oxide, calcium oxide and magnesium oxide is inserted into said pre-mixing tank 6, through a loading opening 8. Once the premixing of the components has been carried out, the mixture to be treated is transferred into said separation means 3, which operate in the conditions described above and in which the transformation of the nitrogenous substances into ammonia and the separation of the resulting gaseous phase occur.

The treatment of the organic waste in the separation means 3 preferably occurs at a temperature of between 40°C and 100°C. For this reason, the waste inside the separation means 3 must be heated to the operating temperature. In this case, a boiler 9 is thus foreseen in which the water is heated, and is then made to circulate in a heat exchanger 15 inside the separation means 3 or in an outer jacket. The boiler will typically comprise burners fed with methane or another fuel.

The separation means 3, as stated, allow the separation of the gases (ammonia or other), already present in the waste and/or formed following the treatment, and of part of the water of the waste (which is taken away as steam), obtaining a concentration of the waste that, according to the time and the operating conditions of the separation step, can lead to a solid or semi-solid residue. The concentrated residue is taken away from the separation means 3 through the discharge opening 10 and can then be reused as fertilizer.

The gaseous phase, on the other hand, is taken away along the line 12, possibly intercepted by vacuum means 11 that take care of creating a relative pressure of between -0.5 and -0.95 bar inside the separation means 3, which promotes the evaporation of the gases and vapours.

The gaseous phase, which as stated contains in particular ammonia and steam, is inserted into said treatment means 4, where the ammonia is placed in contact with a suitable acidic medium (for example sulphuric acid or carbon dioxide) that takes care of pulling down the ammonia vapours and of transforming it into a salt or derivative thereof (specifically, ammonium sulphate or urea) in turn able to be used as fertilizer. Said acidic medium is dispensed from a storage tank 13 and is inserted inside the treatment means 4 by sprinkling or in any case through suitable nozzles, so as to maximise the contact surface.

The ammonia salt or derivative and the condensed water are then removed separately from the treatment means 4.

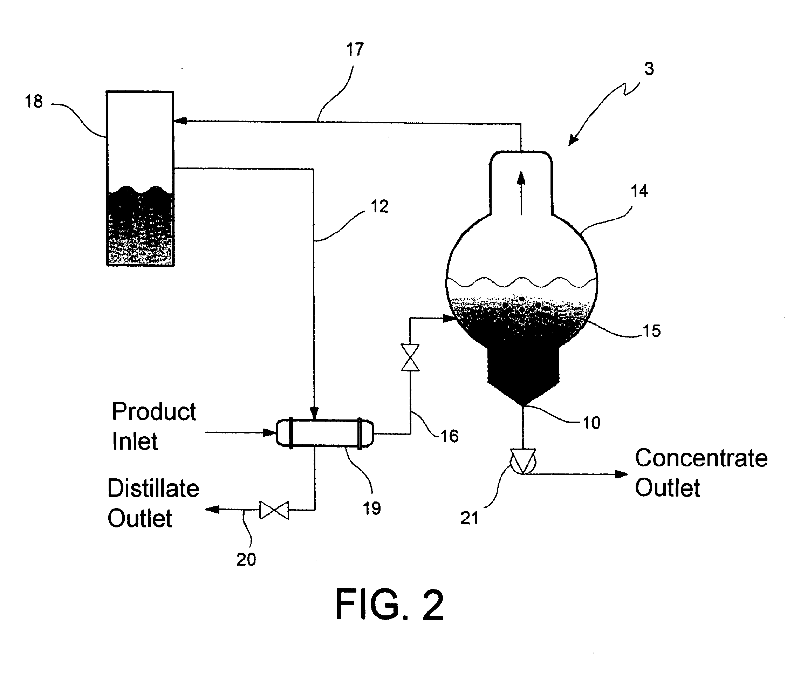

Figure 2 shows an embodiment of the separation means 3. Such separation means 3 comprise a concentrator/evaporator 14 in which the waste to be treated is inserted, through the line 16. Inside the concentrator/evaporator 14 there is a heat exchanger 15 fed with water or another hot fluid obtained through said boiler 9 (figure 1).

The gaseous/vapour phase is transferred, along the line 17, into condensation means 18 and from here it passes to collection means 19 under a vacuum (through vacuum means, not shown), that take care of creating the vacuum inside the condensation means 18 and the concentrator/evaporator 14.

In the condensation means 18 the separation between condensable vapours (water) and non-condensable gaseous phase (ammonia or other gases) takes place.

Inside the collection means 19 there is a heat exchanger (not shown) in which the waste to be treated passes, which thus undergoes a preheating thanks to the latent heat released by the uncondensed gases in the means 18. The gases are then taken away along the line 20 to be transferred to the treatment means 4 (figure 1), whereas the waste to be treated, suitably preheated, is inserted along the line 16 inside the concentrator/evaporator 14.

Pumping means 21, on the other hand, take care of taking the concentrated residue away from the concentrator/evaporator 14.

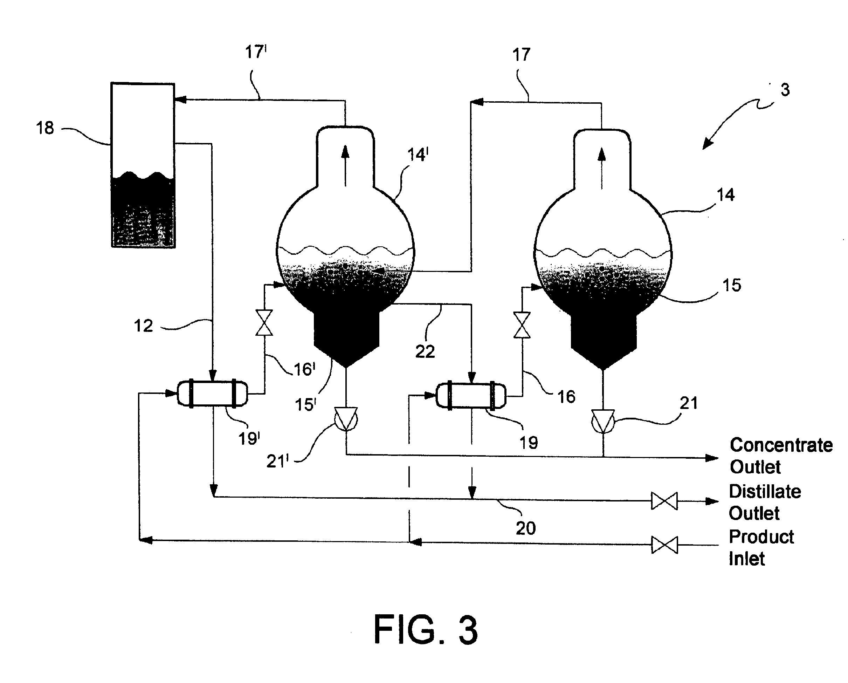

Figure 3 shows a further embodiment of the separation means 3, which comprises a two-stage treatment through two concentrators/evaporators in parallel.

A first amount of waste to be treated is inserted, through the line 16, into a first concentrator/evaporator 14. Said first concentrator/evaporator 14 is heated through a heat exchanger 15 fed with water or other hot fluid obtained through said boiler 9 (figure 1).

A second amount of waste to be treated is inserted into a second concentrator/evaporator 14', through the line 16'. Said second concentrator/evaporator 14' also comprises a heat exchanger 15', which however is fed directly with the gases/vapours separated in the first concentrator/evaporator 14. These, after having passed through said heat exchanger 15', are transferred, along the line 22, into the collection means 19 under a vacuum that, like in the embodiment of figure 2, take care of applying the desired vacuum inside the first concentrator/evaporator 14 and of preheating said first amount of waste, through a suitable heat exchanger.

The gaseous/vapour phase separated in the second concentrator/evaporator 14' is, on the other hand, transferred into the condensation means 18 and then into the collection means 19' under a vacuum, which act in a totally analogous way to the collection means 19 described above.

The separated gases are finally combined and taken away along the line 20, to be introduced into the treatment means 4 (figure 1), whereas the concentrated residue of the two concentrators/evaporators 14, 14' is taken away through respective pumping means 21, 21' and finally combined for reuse as fertilizer.

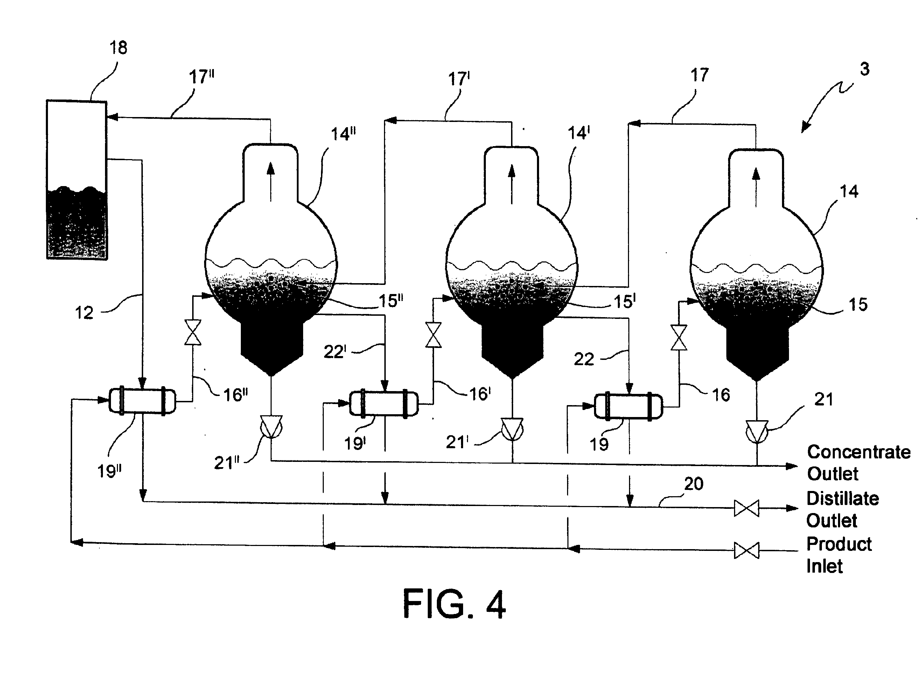

Figure 4 shows a third embodiment of the separation means 3, in which there are three concentrators/evaporators 14, 14', 14'' arranged in parallel.

A first amount of waste to be treated is inserted into a first concentrator/evaporator 14, through the line 16. Said first concentrator/evaporator 14 is heated through a heat exchanger 15 fed with water or another hot fluid obtained through said boiler 9 (figure 1).

A second amount of waste to be treated is inserted into a second concentrator/evaporator 14', through the line 16'. Said second concentrator/evaporator 14' also comprises a heat exchanger 15', which however is fed directly with the gases/vapours separated in the first concentrator/evaporator 14. These, after having passed through said heat exchanger 15', are transferred, along the line 22, into the collection means 19 under a vacuum that, like in the embodiment of figure 2, take care of applying the desired vacuum inside the first concentrator/evaporator 14 and of preheating said first amount of waste through a suitable heat exchanger.

A third amount of waste to be treated is inserted into a third concentrator/evaporator 14'', through the line 16''. Said third concentrator/evaporator 14'' also comprises a heat exchanger 15", which however is fed directly with the gases/vapours separated in the second concentrator/evaporator 14'. These, after having passed through said heat exchanger 15'', are transferred, along the line 22', into the collection means 19' under a vacuum that, similarly to what is shown above, take care of applying the desired vacuum inside the second concentrator/evaporator 14' and of preheating said second amount of waste through a suitable heat exchanger.

The gaseous/vapour phase separated in the third concentrator/evaporator 14" is on the other hand transferred into the condensation means 18 and then into the collection means 19" under a vacuum, which act in a totally analogous way to the collection means 19, 19' described above.

The separated gases are finally combined and taken away along the line 20, to be introduced into the treatment means 4 (figure 1), whereas the concentrated residue of the three concentrators/evaporators 14, 14', 14'' is taken away through respective pumping means 21, 21', 21" and finally combined for reuse as fertilizer.

The advantage of the double or triple-stage embodiments shown in figures 3 and 4, respectively, consists of the maximum exploitation of the heat of the gaseous phase, so as to increase the productivity of the plant.

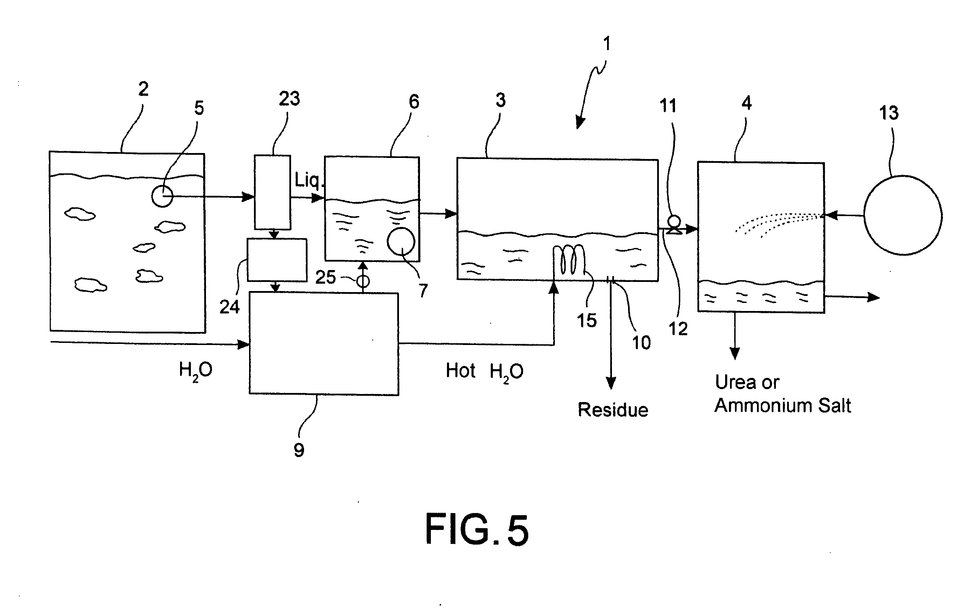

According to a further embodiment of the plant 1 for treating an organic waste, shown in figure 5, the broken down waste coming out from the tank 2 is filtered through filtering means 23 (for example a filter press). The liquid portion is inserted into the premixing tank 6, whereas the solid is sent into drying means 24 and from here, through suitable transferring means (not shown), as a fuel in the boiler 9. In such a boiler methane or another combustible gas can be used as an additional fuel.

The organic ashes of said filtered solid waste are then recovered and inserted, through suitable adding means 25 (for example an Archimedean screw) into the premixing tank 6.

This embodiment has two advantages. On the one hand the use of the solid residue of the waste as a fuel decreases the need for methane or another gaseous fuel, increasing the cost-effectiveness of the process. On the other hand, the solid portion of the waste is thus transformed into ash to be used in the subsequent denitrification treatment of the waste.

As stated, the process of the invention is simple and efficient and allows the denitrification of the organic waste to give a fertilizing material that can be used directly in the field while fully respecting the applicable laws.

The process does not cause the dispersion in the environment of harmful liquids or gases: the distilled water is substantially pure and can thus be discharged without damaging the environment. The ammonia gas is transformed into salts or urea and is also reused as fertilizer. The process is thus environmentally-friendly.

It has been demonstrated experimentally that through the process of the invention there is a substantial denitrification of the effluent, passing from a nitrate content of 250-300 mg/kg of effluent to a content, in the concentrated residue, of no more than 20 mg/kg.

It is clear that only some particular embodiments of the present invention have been described, to which the man skilled in the art will be able to bring any modifications necessary to adapt it to particular applications, without however departing from the scope of protection of the present invention.

## Claims

1. Denitrification process of an organic waste comprising a step of treating said organic waste in the presence of a mixture comprising phosphorus pentoxide, potassium oxide, calcium oxide and magnesium oxide in the form of powder and operating in conditions in which the gaseous/vapour phase containing ammonia is taken away by evaporation or distillation.

2. Process according to claim 1, wherein said ammonia is transformed, downstream of said treatment step, into a salt or derivative thereof through an acidic medium.

3. Process according to claim 1 or 2, wherein said process is carried out at a temperature of between 40°C and 100°C, or between 60°C and 95°C, or between 80°C and 90°C.

4. Process according to any one of claims 1 to 3, wherein said process is carried out in a vacuum, or else at a relative pressure of between -0.5 and -0.95 bar, even more preferably between -0.6 and -0.85 bar.

5. Process according to any one of claims 1 to 4, wherein the time that the waste stays in the separation means varies between 40 and 240 minutes.

6. Process according to any one of claims 1 to 5, wherein said mixture comprising phosphorus pentoxide, potassium oxide, calcium oxide and magnesium oxide is added to the organic waste to be treated in ratios of between 0.3 and 15 kg per 1000 litres of organic waste, or else between 0.8 and 8 kg per 1000 litres of organic waste.

7. Process according to any one of claims 1 to 6, wherein said mixture of oxides preferably comprises the following weight percentages of the components:
| | |
|---|---|
| phosphorus pentoxide (P₂O₅) | 1.3-20% |
| potassium oxide (K₂O) | 5-35% |
| calcium oxide (CaO) | 18-45% |
| magnesium oxide (MgO) | 1.3-16%. |

8. Process according to any one of claims 1 to 7, wherein said mixture comprising phosphorus pentoxide, potassium oxide, calcium oxide and magnesium oxide consists of or comprises as the main component ash from organic material.

9. Process according to claim 8, wherein said ash is vegetal or is ash coming from burning animal excrement.

10. Process according to any one of claims 2 to 9, wherein said acidic medium is sulphuric acid or carbon dioxide.

11. Process according to any one of claims 1 to 10, wherein said organic waste is filtered to give a liquid phase, which is treated in the presence of said mixture of oxides, and a solid phase; wherein said solid phase is dried and then burnt with formation of an ash from organic material that can be used as such, or possibly added to with phosphorus pentoxide, potassium oxide, calcium oxide and/or magnesium oxide, in the treatment of the liquid phase of the waste.

12. Process according to any one of claims 1 to 11, wherein said organic waste is livestock effluent.

13. Plant (1) for treating organic waste according to the process of any one of claims 1 to 12, comprising a tank (2) in which the organic waste is collected, separation means (3), in which the treatment of the organic waste in the presence of the mixture of phosphorus pentoxide, potassium oxide, calcium oxide and magnesium oxide and the separation of the gaseous phase occur, and treatment means (4) of the gaseous phase separated in the separation means (3), in which the pulling down of the ammonia that has developed occurs through said acidic medium during the course of the separation step.

14. Plant (1) according to claim 13, wherein, in the collection tank (2) or downstream of it, pumping and shredding means (5) are arranged that take care of sending the organic waste, suitably broken down, into a pre-mixing tank (6) that comprises agitation means (7) and a loading opening (8) in which said mixture comprising phosphorus pentoxide, potassium oxide, calcium oxide and magnesium oxide is inserted.

15. Plant (1) according to claim 13 or 14, comprising a boiler (9) in which the water or other fluid is heated, which is then made to circulate in a heat exchanger (15) inside the separation means (3) or in an outer jacket.

16. Plant (1) according to any one of claims 13 to 15, wherein said separation means (3) are in fluid communication with means for the vacuum (11) so as to carry out said separation step under a vacuum.

17. Plant (1) according to any one of claims 13 to 16, wherein said separation means (3) comprise at least one concentrator/evaporator (14, 14', 14") in which the waste to be treated is inserted, wherein inside said at least one concentrator/evaporator (14, 14', 14'') there is a heat exchanger (15, 15', 15") fed with water or other hot fluid obtained through said boiler (9) or else with the gases/vapours coming out from one of said concentrators/evaporators (14, 14', 14'').

18. Plant (1) according to claim 17, comprising condensation means (18) and collection means (19, 19', 19'') under a vacuum, which take care of creating the vacuum inside the condensation means (18) and inside said at least one concentrator/evaporator (14, 14', 14'').

19. Plant (1) according to claim 18, wherein, in said collection means (19, 19', 19''), there is a heat exchanger in which the waste to be treated passes, which thus undergoes a pre-heating thanks to the latent heat released by the gases coming out from said at least one concentrator/evaporator (14, 14', 14'').

20. Plant (1) according to any one of claims 17 to 19, comprising two or three concentrators/evaporators (14, 14', 14'') arranged in parallel.

21. Plant (1) according to any one of claims 13 to 20, wherein, between said tank (2) and said pre-mixing tank (6), there are filtering means (23) for the separation of a liquid portion of the waste to be treated from the solid portion.

22. Plant (1) according to claim 21, comprising drying means (24) for said solid portion and means for transferring said dried solid portion into the boiler (9).

23. Plant (1) according to claim 22, comprising means 25 for adding the organic ashes of said solid waste, dried and incinerated in said boiler (9), in said premixing tank (6).
